# EUROPÄISCHE PATENTSCHRIFT

(11) **EP 3 637 981 B1**
(45) Veröffentlichungstag und Bekanntmachung des Hinweises auf die Patenterteilung: **08.03.2023**
(21) Anmeldenummer: 17787880.8
(22) Anmeldetag: 25.09.2017
(51) Int. Cl.: A01D 90/10

(54) **ÜBERLADEVORRICHTUNG ZUM AUFSAMMELN UND ÜBERGEBEN VON ERNTEGUT AN EINEN TRANSPORTWAGEN**
LOAD TRANSFER DEVICE FOR COLLECTING AND TRANSFERRING HARVESTED MATERIAL TO A TRANSPORT VEHICLE
DISPOSITIF DE TRANSBORDEMENT SERVANT À RAMASSER ET À TRANSFÉRER DES PRODUITS DE RÉCOLTE SUR UN CHARIOT DE TRANSPORT

(30) Priorität: 16.06.2017 DE 102017113241
(43) Veröffentlichungstag der Anmeldung: 22.04.2020
(73) Patentinhaber: Fliegl Agrartechnik GmbH, 84453 Mühldorf am Inn (DE)
(72) Erfinder: FLIEGL SEN., Josef, 84556 Kastl (DE)
(74) Vertreter: Nußbaum, Christopher
(86) Internationale Anmeldenummer: PCT/EP2017/074195
(87) Internationale Veröffentlichungsnummer: WO 2018/228712

(56) Entgegenhaltungen:
- EP-A1- 2 995 191
- CH-A- 403 381
- DE-A1- 2 120 612
- DE-A1- 2 643 652

## Beschreibung

Die Erfindung betrifft eine Überladevorrichtung zum Aufsammeln und Übergeben von Erntegut an einen Transportwagen.

In der Landwirtschaft muss unterschiedlichstes Erntegut aufgesammelt und abtransportiert werden. Unter anderem wird oftmals halmgutartige Biomasse, insbesondere in Form von Stroh oder anderweitigen Gräseraufkommen, von Feldern aufgesammelt und wegtransportiert. Derartige halmgutartige Biomasse kann feuchtes, angewelktes und trockenes Gras, also Heu, sein, aber auch Getreidestroh.

Hierzu offenbart zum Beispiel die CH 403 381 A einen Ladewagen mit einem großen Laderaum, der als hintere schwenkbare Ladebordwand ein erstes Förderband aufweist, mittels dessen im Laderaum angeordnetes Ladegut aus dem Laderaum nach hinten herausbefördert werden kann. Mittels eines zweiten Förderbands, das nicht länger als der Ladewagen breit ist, kann das Erntegut, das vom ersten Förderband herabfällt, seitlich vom Ladewagen abgeworfen werden.

Die DE 34 04 671 A1 beschreibt eine Erntemaschine mit einem Erntekopf. An einem hinteren Ende des Erntekopfes ist ein Schneidkasten angeordnet und dient zur Aufnahme von Erntegut vom Erntekopf und zur Zerkleinerung von Erntegutstengeln. Ein Gebläse der Erntemaschine ist dazu eingerichtet, Erntegutstücke in einen auf einem Heckrahmen der Erntemaschine angeordneten Kasten auszustoßen. Seitlich am Kasten ist eine Rinne angeordnet, die so ausgeklappt werden kann, dass eine Bodenfläche der Rinne mit einer Bodenfläche des Kastens fluchtet. An den Bodenflächen sind Plattenbänder angeordnet, mittels derer das im Kasten aufgenommene Erntegut in einen daneben wartenden Wagen befördert werden kann, wenn der Kasten seitlich schräggestellt worden ist.

Ferner ist es weit verbreitet, Getreidestroh oder auch andere halmgutartige Biomasse mittels sogenannter Rundballenpressen aufzusammeln und zu Ballen zu pressen. Derartige Rundballenpressen werden üblicherweise von einem Traktor gezogen und über eine Zapfwelle des Traktors angetrieben. Solche Rundballenpressen sind beispielsweise in der DE 10 2011 109 890 A1 oder in der DE 33 13 883 A1 gezeigt.

Darüber hinaus ist es auch durchaus gängig, Halmgut direkt mittels dafür geeigneter, meistens mittels Zugmaschinen in Form von Traktoren oder dergleichen gezogener Ladewagen vom Boden aufzusammeln und dann mit denselben Ladewagen abzutransportieren. Um dies zu ermöglichen, weisen solche Ladewagen üblicherweise Aufsammeleinheiten zum Aufsammeln des Ernteguts vom Boden und oftmals auch Schneideinheiten zum Zerschneiden des aufgesammelten Ernteguts auf. Nachteilig bei dieser Vorgehensweise ist, dass während des Abtransports des aufgenommenen Ernteguts mittels des Ladewagens dieser nicht mehr dazu eingesetzt werden kann, weiteres Erntegut einzusammeln.

Es ist die Aufgabe der vorliegenden Erfindung, eine Lösung bereitzustellen, mittels welcher auf besonders effiziente Weise Erntegut, insbesondere halmgutartige Biomasse, aufgesammelt und abtransportiert werden kann.

Diese Aufgabe wird durch eine Überladevorrichtung zum Aufsammeln und Übergeben von Erntegut an einen Transportwagen, insbesondere von halmgutartiger Biomasse, mit den Merkmalen des Patentanspruchs 1 gelöst. Vorteilhafte Ausgestaltungen mit zweckmäßigen und nicht trivialen Weiterbildungen der Erfindung sind in den abhängigen Ansprüchen angegeben.

Die erfindungsgemäße Überladevorrichtung zum Aufsammeln und Übergeben von Erntegut an einen Transportwagen, insbesondere von halmgutartiger Biomasse, umfasst eine Aufsammeleinheit zum Aufsammeln des Ernteguts vom Boden. Des Weiteren weist der Überladevorrichtung eine Schneideinheit zum Zerschneiden des aufgesammelten Ernteguts auf. Zudem umfasst die Überladevorrichtung einen Zwischenspeicher zum Aufnehmen des zerschnittenen Ernteguts und eine Fördereinrichtung zum Befördern des zerschnittenen Ernteguts aus dem Zwischenspeicher zu einer Überladeeinheit der Überladevorrichtung, mittels welcher das zerschnittene Erntegut in einen seitlich neben der Überladevorrichtung angeordneten Laderaum des Transportwagens über eine Laderaumwand des Laderaums hinweg, beförderbar ist. Unter seitlich neben der Überladevorrichtung ist zu verstehen, dass die Überladeeinheit dazu ausgelegt ist, bezogen auf eine bestimmungsgemäße Fahrtrichtung der Überladevorrichtung, insbesondere einer Vorwärtsfahrtrichtung, das Erntegut seitlich auf ein getrenntes Fahrzeug in Form des Transportwagens zu befördern. Die Überladevorrichtung ist also weder Teil des Transportwagens noch Teil eines Gespanns, zu welchem der Transportwagen gehört. Der Transportwagen selbst umfasst vorzugsweise selbst keine eigene Lade- bzw. Aufnahmefunktion für Erntegut.

Die Überladevorrichtung ist als Anhänger oder als Kraftfahrzeug ausgebildet, wobei ein Rad des Überladevorrichtung seitlich ausfahrbar und einfahrbar ist. Insbesondere wenn die Überladeeinheit seitlich ausfahrbar ist, ist das ausfahrbare Rad von Vorteil. Eine mit dem Ausfahren der Überladeeinheit einhergehende Verschiebung des Schwerpunkts der Überladevorrichtung kann somit kompensiert werden.

Gemäß einem alternativen unabhängigen Aspekt der Erfindung kann es auch vorgesehen sein, dass die Überladevorrichtung die Schneideinheit nicht umfasst. In dem Fall kann die Fördereinheit das Erntegut, ohne dass dieses geschnitten wird, in den Zwischenspeicher befördern. In dem Fall wird dann das ungeschnittene Erntegut mittels der Überladevorrichtung mittels der Fördereinrichtung aus dem Zwischenspeicher zur Überladeeinheit und mittels dieser in den Laderaum des Transportwagens befördert.

Bei der erfindungsgemäßen Lösung ist es also vorgesehen, dass die Überladevorrichtung das Aufsammeln und Übergeben des Ernteguts übernimmt, wobei den eigentlichen Abtransport des Ernteguts ein Transportwagen übernehmen kann, der während des Überladevorgangs neben der Überladevorrichtung fährt. Die erfindungsgemäße Überladevorrichtung kann also quasi kontinuierlich dafür genutzt werden, Erntegut, insbesondere in Form von halmgutartiger Biomasse, beispielsweise von einem Feld aufzusammeln, zu zerkleinern und zwischenzulagern. Sofern ein Transportwagen gerade in der Nähe sein sollte, kann dieser parallel zur Überladevorrichtung fahren und mittels der Überladeeinheit der Überladevorrichtung befüllt werden. Sollte der betreffende Transportwagen, insbesondere dessen Laderaum, vollständig befüllt worden sein, so kann der nächste Transportwagen an den Überladevorrichtung herangefahren werden, um diesen zu befüllen. Während des Wechsels der Transportwagen können die Aufsammeleinheit und die Schneideeinheit der Überladevorrichtung weiterbetrieben werden, sodass das Erntegut weiterhin vom Boden aufgesammelt, zerschnitten, und in den Zwischenspeicher der Überladevorrichtung befördert werden kann. Einzig die Fördereinrichtung und die Überladeeinheit werden während des Wechsels der Transportwagen gestoppt, wobei das Erntegut weiterhin aufgenommen und zwischengelagert werden kann. Dadurch fallen keine Standzeiten bzw. keine Stillstandzeiten beim Wechsel von Transportwagen an. Mit anderen Worten ist es mittels der erfindungsgemäßen Lösung also möglich, dass die Überladevorrichtung, beispielsweise durch einen Traktor oder ein anderes Zugfahrzeug gezogen oder getragen, durchgehend betrieben wird, um Erntegut vom Boden aufzusammeln, zu zerschneiden und in seinem Zwischenspeicher zwischenzulagern. Durch das Vermeiden von unnötigen Standzeiten bzw. Stillstandzeiten der Überladevorrichtung sind sehr hohe Flächenleistungen möglich.

Darüber hinaus bringt die erfindungsgemäße Lösung noch einen weiteren Vorteil mit sich. Beispielsweise bei engen Kurvenfahrten braucht ein mittels der Überladevorrichtung zu beladender Transportwagen nicht dicht an der Überladevorrichtung zu fahren, da das Überladen vorzugsweise vor engen Kurven, besonders bevorzugt also schon während der Geradeausfahrt, gestoppt wird, wobei das Erntegut weiterhin mittels der Überladevorrichtung aufgenommen und zwischengespeichert wird. Sobald die Überladevorrichtung sich wieder auf einer geraden Strecke befindet, können die Fördereinrichtung und die Überladeeinheit wieder aktiviert werden, um das zwischengespeicherte und zerschnittene Erntegut an den Transportwagen zu übergeben. Dadurch kann sichergestellt werden, dass so gut wie kein oder gar kein Erntegut verlorengeht, auch wenn engste Kurven mittels der Überladevorrichtung durchfahren werden müssen. Insgesamt ist es also mittels der erfindungsgemäßen Überladevorrichtung möglich, gleichzeitig Erntegut aufzusammeln, in die gewünschte Länge zu schneiden, zwischenzuspeichern und an einen Transportwagen zu übergeben.

Eine vorteilhafte Ausführungsform der Erfindung sieht vor, dass die Aktivierung der Fördereinrichtung und die Aktivierung der Überladeeinheit aneinander gekoppelt sind. Die Kopplung kann sowohl mechanisch als auch steuerungstechnisch realisiert sein. Gekoppelt bedeutet, dass sobald die Fördereinrichtung aktiviert, also angeschaltet wird, die Überladeeinheit automatisch ebenfalls mitaktiviert wird. Wird also durch Aktivierung der Fördereinrichtung im Zwischenspeicher aufgenommenes zerschnittenes Erntegut in einen Zugriffsbereich der Überladeeinheit befördert, so wird das zerschnittene Erntegut automatisch aufgrund der gekoppelten Aktivierung der Überladeeinheit schnellstmöglich in Richtung des betreffenden Transportwagens weiterbefördert. Genauso kann auch die Deaktivierung der Fördereinrichtung an eine Deaktivierung der Überladeeinheit gekoppelt sein, wobei dies ebenfalls mechanisch oder steuerungstechnisch erfolgen kann. Ein unnötiger Betrieb der Überladeeinheit kann dadurch verhindert werden, da bei deaktivierter Fördereinrichtung spätestens nach einer gewissen Zeit kein zerschnittenes Erntegut mehr im Zugriffsbereich der Überladeeinheit vorhanden sein wird.

Eine weitere vorteilhafte Ausführungsform der Erfindung sieht vor, dass der Betrieb der Aufsammeleinheit und Schneideinheit vom Betrieb der Fördereinrichtung und der Überladeeinheit entkoppelt ist. Wie vorstehend bereits erwähnt, ist es dadurch möglich, dass die Überladevorrichtung kontinuierlich Erntegut vom Boden aufsammeln und zerschneiden und somit dem Zwischenspeicher zuführen kann, ohne dass dabei die Fördereinrichtung und die Überladeeinheit aktiviert sein müssen. Wie bei dem eingangs genannten Beispiel ist es dadurch beispielsweise möglich, dass ein Wechsel von einem Transportwagen auf den anderen Transportwagen problemlos vorgenommen werden kann, wobei die Überladevorrichtung während des Wechsels weiterhin Erntegut aufsammelt und zerschneidet. Sobald der Wechsel der Transportwagen vollzogen worden ist, können die unabhängig von der Aufsammeleinheit und Schneideinheit betreibbare Fördereinrichtung und Überladeeinheit aktiviert werden, sodass das zwischenzeitlich im Zwischenspeicher zwischengespeicherte und zerschnittene Erntegut in Richtung der Überladeeinheit befördert und mittels dieser in den Laderaum des Transportwagens befördert werden kann. Das Überladen des zwischengespeicherten Ernteguts in einen Transportwagen kann also jederzeit bei Bedarf gestoppt werden, wobei die Überladevorrichtung weiterhin kontinuierlich dafür verwendet werden kann, Erntegut vom Boden aufzusammeln, zu zerschneiden und in seinem Zwischenspeicher zwischenzuspeichern. Der Überladevorrichtung kann dadurch kontinuierlich dafür genutzt werden, Erntegut vom Boden aufzunehmen, zu zerschneiden und zwischenzuspeichern, infolgedessen sehr hohe Flächenleistungen mit der Überladevorrichtung möglich sind.

Gemäß einer weiteren vorteilhaften Ausführungsform der Erfindung ist es vorgesehen, dass die Überladeeinheit eine Erfassungseinrichtung aufweist, welche dazu ausgelegt ist, zu erfassen, ob die Überladeeinheit in einer bestimmungsgemäßen Überladeposition relativ zum Laderaum des Transportwagens angeordnet ist. Die Erfassungseinrichtung kann beispielsweise einen optischen Sensor, einen Radarsensor, einen Ultraschallsensor oder dergleichen aufweisen, mittels welchem auf zuverlässige Weise festgestellt werden kann, ob die Überladeeinheit in einer bestimmungsgemäßen Überladeposition relativ zum Laderaum des Transportwagens angeordnet worden ist, in welcher verlustfrei oder zumindest möglichst verlustfrei mittels der Überladeeinheit Erntegut von der Überladevorrichtung in den Laderaum des Transportwagens befördert werden kann. Dadurch kann auf zuverlässige Weise sichergestellt werden, dass kein Erntegut beim Überladen in den Laderaum des Transportwagens verlorengeht. Vorzugsweise ist die Aktivierung der Überladeeinheit zum Befördern des zerschnittenen Ernteguts in den Laderaum daran gekoppelt, dass die Überladeeinheit in ihrer bestimmungsgemäßen Überladeposition relativ zum Laderaum des Transportwagens angeordnet worden ist. Die Erfassungseinrichtung, welche dazu ausgelegt ist, zu erfassen, ob die Überladeeinheit in ihrer bestimmungsgemäßen Überladeposition angeordnet ist, kann beispielsweise signaltechnisch mit einer Steuereinrichtung der Überladevorrichtung gekoppelt sein, welche dazu eingerichtet ist, die Überladeeinheit nur dann zu aktivieren, wenn erfasst worden ist, dass die Überladeeinheit in ihrer bestimmungsgemäßen Überladeposition relativ zum Laderaum des Transportwagens angeordnet ist. Zudem kann die Steuereinrichtung auch dazu eingerichtet sein, die Überladeeinheit zu deaktivieren, sobald festgestellt wird, dass die bestimmungsgemäße Überladeposition relativ zum Laderaum des Transportwagens verlassen worden ist. Dadurch kann sichergestellt werden, dass das Überladen des aufgenommenen Ernteguts von der Überladevorrichtung in den Laderaum des Transportwagens erst dann beginnt, wenn die Überladeeinheit auch korrekt positioniert worden ist, wobei vorzugsweise das Überladen des Ernteguts in den Laderaum gestoppt wird, sobald erfasst wird, dass die bestimmungsgemäße Überladeposition der Überladeeinheit relativ zum Laderaum des Transportwagens verlassen worden ist.

In weiterer vorteilhafter Ausgestaltung der Erfindung ist es vorgesehen, dass die Überladevorrichtung eine Erfassungseinrichtung aufweist, welche dazu ausgelegt ist, zu erfassen, ob der Zwischenspeicher einen vorgegebenen Maximalfüllstand erreicht hat. Ferner kann diese Erfassungseinrichtung auch ganz allgemein dazu ausgelegt sein, einen Füllstand des Zwischenspeichers an sich zu erfassen. Die Erfassungseinrichtung kann zur Füllstandserfassung des Zwischenspeichers beispielsweise optische Sensoren, wie ein Kamerasystem oder dergleichen, oder auch andere dafür geeignete Sensoren aufweisen. Vorzugsweise ist eine Steuereinrichtung der Überladevorrichtung dazu eingerichtet, ein Signal an ein die Überladevorrichtung ziehendes oder anderweitig transportierendes Zugfahrzeug, z.B. an einen Traktor zu übertragen, wenn der Maximalfüllstand erreicht worden ist. Bei dem Signal kann es sich im einfachsten Fall um ein Warnsignal handeln, infolgedessen eine optische und/oder akustische Warnung mittels des Zugfahrzeugs ausgegeben wird. Ein Fahrer des Zugfahrzeugs wird also darauf hingewiesen, dass der Maximalfüllstand im Zwischenspeicher erreicht worden ist und dieser zunächst einmal nicht weiter befüllt werden sollte, bevor dieser nicht wieder etwas entleert worden ist. Zum Beispiel kann als Warnhinweis ausgegeben werden, dass der Fahrer das Zugfahrzeug erst einmal stoppen soll. Alternativ oder zusätzlich kann das Signal auch bewirken, dass das Zugfahrzeug automatisch gestoppt oder verlangsamt wird. Sollte also der Maximalfüllstand im Zwischenspeicher erreicht worden sein, ist es auch möglich, dass das Zugfahrzeug selbstständig, also automatisch, stoppt oder zumindest verlangsamt wird. Dadurch kann ein Überlaufen des Zwischenspeichers zuverlässig verhindern werden. Durch die genannten Maßnahmen kann sichergestellt werden, dass - sollte der Zwischenspeicher tatsächlich einmal voll sein - kein weiteres Erntegut vom Boden aufgesammelt und/oder zerschnitten und somit dem Zwischenspeicher zugeführt wird.

Eine weitere vorteilhafte Ausgestaltung der Erfindung sieht vor, dass die Überladeeinheit in einer eingeklappten Nichtgebrauchsstellung und in einer ausgeklappten Überladestellung positionierbar ist. Vorzugsweise ist die Überladeeinheit derart ausgestaltet, dass sie in ihrer ausgeklappten Überladestellung Überladehöhen von 4,5 m erreichen kann, sodass auch entsprechend hohe Laderaumwände von Laderäumen von Transportwagen überwunden werden können. Dadurch, dass die Überladeeinheit vorzugsweise zwischen ihrer eingeklappten Nichtgebrauchsstellung und ihrer ausgeklappten Überladestellung positionierbar ist, kann der Straßenverkehrsordnung Genüge getan werden. Denn in der eingeklappten Nichtgebrauchsstellung ist die Überladeeinheit vorzugsweise niedriger angeordnet als in der ausgeklappten Überladestellung, wobei in der eingeklappten Nichtgebrauchsstellung die Überladeeinheit auch seitlich so weit eingeklappt ist, dass eine im Straßenverkehr maximal zulässige Breite nicht überschritten wird.

Gemäß einer weiteren vorteilhaften Ausführungsform der Erfindung ist es vorgesehen, dass die Überladeeinheit zum Befördern des zerschnittenen Ernteguts in den Laderaum des Transportwagens ein Förderband, einen Schneckenförderer und/oder ein Gebläse mit einem daran angeschlossenen Beförderungsrohr aufweist. Vorzugweise weist die Überladeeinheit zum Befördern des zerschnittenen Ernteguts nur eine Art von Beförderungsmitteln - sei es ein Förderband, einen Schneckenförderer oder ein Gebläse - auf. Alternativ ist es aber auch möglich, dass diese Fördermöglichkeiten miteinander kombiniert werden. Durch an das aufzusammelnde und zu übergebende Erntegut angepasste Fördermittel kann ein besonders effizienter Betrieb der Überladevorrichtung sichergestellt werden.

Gemäß einer weiteren vorteilhaften Ausführungsform der Erfindung ist es vorgesehen, dass die Fördereinrichtung wenigstens einen im Bereich einer Ladefläche des Zwischenspeichers angeordneten Kratzboden aufweist, mittels welchem das im Zwischenlager aufgenommene zerschnittene Erntegut in Richtung der Überladeinheit beförderbar ist. Der Kratzboden besteht vorzugsweise aus jeweils zwei Kettensträngen, die auf einer lastaufnehmenden Seite von einem Taschenrad bewegt werden. Auf zwei gleichmäßig angetriebenen Ketten sind in regelmäßigen Abständen zur Beförderung des Ernteguts Mitnehmerleisten angebracht. Mittels solcher Kratzböden können insbesondre lose, inhomogene Erntegüter besonders gut befördert werden.

In weiterer vorteilhafter Ausgestaltung der Erfindung ist es vorgesehen, dass die Fördereinrichtung wenigstens eine an einer der Überladeinheit zugewandten Seite des Zwischenspeichers angeordnete Dosierwalze aufweist, mittels welcher das im Zwischenspeicher zerschnittene Erntegut in Richtung der Überladeinheit beförderbar ist. Vorzugsweise sind mehrere dieser Dosierwalzen in Hochrichtung der Überladevorrichtung übereinander angeordnet. Mittels der übereinander angeordneten Dosierwalzen ist es zuverlässig möglich, insbesondere bei zunehmendem Füllstand des Zwischenspeichers, das zerschnittene Erntegut in Richtung der Überladeeinheit zu befördern.

Eine weitere vorteilhafte Ausführungsform der Erfindung sieht vor, dass die Fördereinrichtung eine den Zwischenspeicher begrenzende Wand aufweist, welche in Richtung der Überladeinheit aus- und einfahrbar ist. Vorzugsweise ist die Wand um eine Achse verschwenkbar gelagert, welche in Querrichtung der Überladevorrichtung verläuft. Beispielsweise kann die Wand mittels Hydraulikzylindern verschwenkt werden, und zwar derart, dass sie entweder von der Überladeinheit weg oder auf diese zu geschwenkt wird. Dadurch kann auf besonders einfache Weise der Aufnahmeraum des Zwischenspeichers variiert werden. Wird die verschwenkbare Wand in Richtung der Überladeinheit geschwenkt, so wird das im Zwischenspeicher aufgenommene und zerschnittene Erntegut in den Eingriffsbereich der Überladeinheit gedrückt. Alternativ ist es auch möglich, dass die begrenzende Wand beispielsweise als Ganzes in Form einer eine Art Abschiebewand translatorisch bewegbar ist, um das im Zwischenspeicher aufgenommene zerschnittene Erntegut in den Eingriffsbereich der Überladeinheit zu verbringen. Vorzugsweise ist es vorgesehen, dass entweder der Kratzboden oder die begrenzende Wand eingesetzt wird, welche in Richtung der Überladeinheit aus- und einfahrbar ist. Die Dosierwalzen werden vorzugsweise in beiden Fällen verwendet. Grundsätzlich ist es aber auch möglich, dass Kratzböden, Dosierwalzen und aus- und einfahrbare Wände in Kombination verwendet werden.

Ferner ist es gemäß einer weiteren vorteilhaften Ausführungsform der Erfindung vorgesehen, dass die Überladevorrichtung zur Energieversorgung eine Schnittstelle für einen Zapfwellenantrieb eines Zugfahrzeugs aufweist. Dadurch können sämtliche Aggregate, welche mit Energie versorgt werden müssen, über den Zapfwellenantrieb des Zugfahrzeugs mit Energie versorgt werden.

Bei der Überladevorrichtung kann es sich um einen Anhänger oder um ein Kraftfahrzeug handeln. Es ist also möglich, dass die Überladevorrichtung über ein Fahrwerk und eine Deichsel aber über keinen eigenen Antrieb verfügt und mittels eines Zugfahrzeugs, beispielsweise mittels eines Traktors, gezogen wird. Ferner kann die Überladevorrichtung auch über ein eigenes Fahrwerk und einen eigenen Antrieb verfügen, also als Kraftfahrzeug ausgebildet und somit als selbstfahrende Maschine ausgeführt sein.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in Alleinstellung oder auch in anderen Kombinationen verwendbar, ohne den Rahmen der Erfindung zu verlassen.

Die Zeichnung zeigt in:
- Fig. 1: eine Draufsicht auf eine von einem ersten Traktor gezogene Überladevorrichtung, welche einem Schwad folgt, und einen mittels eines weiteren Traktors gezogenen Transportwagen, welcher mittels der Überladevorrichtung mit aufgenommenem Erntegut befüllt wird;
- Fig. 2: eine Perspektivansicht einer ersten Ausführungsform der mittels des Traktors gezogenen Überladevorrichtung;
- Fig. 3: eine perspektivische Rückansicht der ersten Ausführungsform des Überladevorrichtung;
- Fig. 4: eine Seitenansicht der mittels des Traktors gezogenen ersten Ausführungsform des Überladevorrichtung;
- Fig. 5: eine Rückansicht der ersten Ausführungsform der Überladevorrichtung, wobei eine Überladeeinheit der Überladevorrichtung in ihrer ausgeklappten Überladestellung positioniert ist;
- Fig. 6: eine weitere Rückansicht der ersten Ausführungsform der Überladevorrichtung, wobei die Überladeeinheit in ihrer eingeklappten Nichtgebrauchsstellung gezeigt ist;
- Fig. 7: eine weitere Perspektivansicht der ersten Ausführungsform der mittels des Traktors gezogenen Überladevorrichtung, wobei eine einen Zwischenspeicher der Überladevorrichtung begrenzende Wand in Richtung der Überladeinheit geklappt worden ist;
- Fig. 8: eine Perspektivansicht einer zweiten Ausführungsform der Überladevorrichtung, wobei diese Ausführungsform keine in Richtung der Überladeinheit klappbare Wand aufweist;
- Fig. 9: eine Seitenansicht der zweiten Ausführungsform der Überladevorrichtung, wobei diese im Inneren einen Kratzboden zur Beförderung von aufgenommenem und zerschnittenem Erntegut in Richtung der Überladeeinheit aufweist;
- Fig. 10: eine Rückansicht, in welcher die zweite Ausführungsform der Überladevorrichtung und ein Transportwagen während des Befüllvorgangs des Transportwagens gezeigt sind;
- Fig. 11: eine perspektivische Rückansicht einer dritten Ausführungsform der Überladevorrichtung, wobei dessen Überladeeinheit ein Gebläse und ein daran angeordnetes Beförderungsrohr zum Befördern des aufgenommenen und zerschnittenen Ernteguts in Richtung des Transportwagens aufweist;
- Fig. 12: eine perspektivische Rückansicht einer vierten Ausführungsform der Überladevorrichtung, wobei dessen Überladeeinheit zwei Rohre und zumindest einen Schneckenförderer zum Befördern des aufgenommenen und zerschnittenen Ernteguts in Richtung des Transportwagens aufweist; und in
- Fig. 13: eine Draufsicht auf den Traktor, welcher die zweite Ausführungsform der Überladevorrichtung seitlich versetzt zieht.

In den Figuren sind gleiche oder funktionsgleiche Elemente mit den gleichen Bezugszeichen versehen worden.

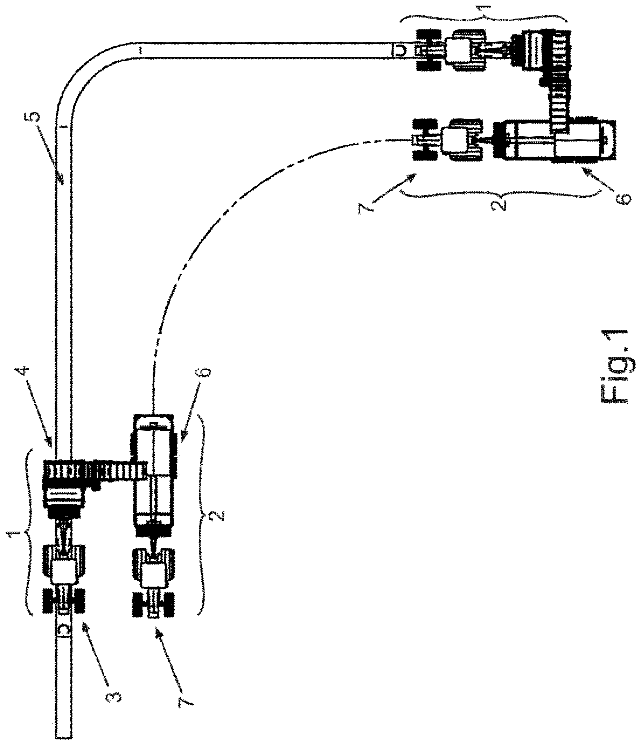

Zwei Gespanne 1, 2 sind in einer perspektivischen Draufsicht in Fig. 1 gezeigt. Das erste Gespann 1 umfasst einen Traktor 3, mittels welchem eine als Anhänger ausgebildete Überladevorrichtung 4 entlang eines Schwads 5 gezogen wird. Als Schwade oder Schwad bezeichnet man das reihenförmig zusammengerechte bzw. abgelegte (geschwadete) Erntegut bei der Ernte von insbesondere Gras oder Getreide, aber auch von anderen Feldfrüchten, zum Beispiel bei Nutzung von Zuckerrübenblättern als Futtermittel. Bei dem Schwad 5 handelt es sich vorzugsweise um aufgehäuftes halmgutartiges Erntegut, welches mittels der Überladevorrichtung 4 aufgenommen, zerkleinert, zwischengespeichert und an einen Transportwagen 6, genauer an einen Laderaum, des Transportwagens 6 des zweiten Gespanns 2 übergeben wird. Der Transportwagen 6 kann beispielsweise ein Kipper oder auch ein Abschiebewagen sein, welcher mittels eines weiteren Traktors 7 gezogen wird.

Mittels der Überladevorrichtung 4 kann kontinuierlich Erntegut entlang des Schwads 5 aufgesammelt, zerkleinert und zwischengespeichert werden. Vorzugsweise wird das zwischengespeicherte und zerkleinerte Erntegut mittels des Überladevorrichtung 4 über eine seitliche Laderaumwand des Laderaums des Transportwagens 6 hinweg übergeben, solange die beiden Gespanne 1, 2 seitlich nebeneinander geradeaus fahren. Sobald eine insbesondere engere Kurvenfahrt ansteht, wird das Überladen des zerschnittenen Ernteguts an den Transportwagen 6 gestoppt, wobei die Überladevorrichtung 4 weiterhin entlang des Schwads 5 bewegt wird und kontinuierlich das Erntegut aufsammelt, zerkleinert und zwischenspeichert.

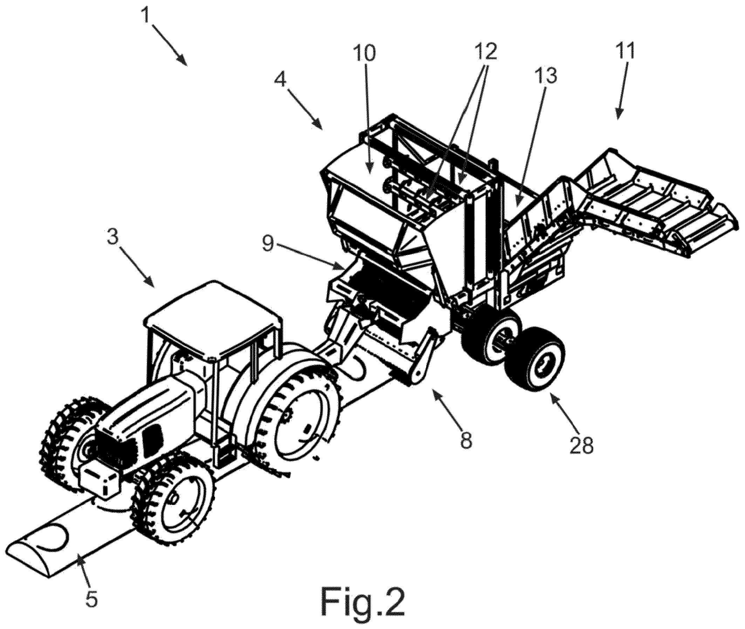

In Fig. 2 ist eine erste Ausführungsform der Überladevorrichtung 4 in einer Perspektivansicht gezeigt, während diese mittels des Traktors 3 gezogen wird. Die Überladevorrichtung 4 umfasst eine Aufsammeleinheit 8 zum Aufsammeln von Erntegut, vorzugsweise von halmgutartiger Biomasse, vom Boden. Die Aufsammeleinheit 8 wird üblicherweise auch als sogenannte Pick-Up bezeichnet. Die Aufsammeleinheit 8 kann beispielsweise eine hier nicht näher erkennbare Walze oder Rolle aufweisen, an welcher mehrere radial abstehende Zinken befestigt sein können, welche in Drehbewegung versetzt werden können, um das Erntegut entlang des in Fig. 1 gezeigten Schwads 5 aufzusammeln. Alternativ kann es sich bei der Aufsammeleinheit entgegen der vorliegenden Darstellung auch beispielsweise um ein Mähwerk handeln, mittels welchem z.B. Frischfutter gemäht und aufgesammelt werden kann.

Des Weiteren umfasst die Überladevorrichtung 4 eine Schneideinheit 9, welche z. B. einen Schneid- und Förderrotor aufweisen kann. Die Schneideinheit 9 kann u.a. noch ein Schneidwerk, z.B. in Form einer verstellbaren Messerschaltung, aufweisen, wobei dieses vorzugsweise über eine entsprechende Mechanik eingeklinkt oder ausgeklinkt werden kann. Im eingeklinkten Zustand zerschneidet das Schneidwerk das zugeführte Erntegut, wobei im ausgeklinkten Zustand das Erntegut nicht zerschnitten wird. Das Schneidwerk wirkt mit dem Schneid- und Förderrotor zusammen.

Mittels der Aufsammeleinheit 8 aufgesammeltes Erntegut wird der Schneideinheit 9 zugeführt, mittels welcher das aufgenommene Erntegut auf eine gewünschte Länge geschnitten werden kann. Ferner weist die Überladevorrichtung 4 noch einen Zwischenspeicher 10 zum Aufnehmen des zerschnittenen Ernteguts auf. Mittels der Schneideinheit 9 zerschnittenes Erntegut gelangt automatisch in den Zwischenspeicher 10.

Am hinteren Ende der Überladevorrichtung 4 befindet sich eine Überladeeinheit 11, welche dazu dient, das zerschnittene und aufgenommene Erntegut seitlich über eine Laderaumwand des Laderaums hinweg in den Transportwagen 6 zu befördern. Bei der vorliegend gezeigten Ausführungsform der Überladevorrichtung 4 umfasst die Überladeeinheit 11 ein nicht näher bezeichnetes Förderband oder mehrere Förderbänder, um das zerschnittene Erntegut in Richtung des Transportwagens 6 zu befördern.

Zudem weist die Überladevorrichtung 4 mehrere übereinander angeordnete Dosierwalzen 12 auf, welche dazu dienen, im Zwischenspeicher 10 aufgenommenes und zerschnittenes Erntegut in Richtung eines Zugriffsbereichs 13 der Überladeeinheit 11 zu fördern. Sobald also beispielsweise die beiden Gespanne 1, 2 parallel und geradeaus nebeneinander herfahren sollten, können die Dosierwalzen 12 aktiviert werden, infolgedessen im Zwischenraum 10 aufgenommenes Erntegut in Richtung er Überladeeinheit 11 befördert wird, wobei mittels der besagten Förderbänder das Erntegut in den Transportwagen 6 befördert wird.

Die Überladevorrichtung 4 weist im vorliegenden Fall nur eine Achse auf, wobei ein an der Achse angebrachtes linkes Rad 28, welches auf derselben Seite angeordnet ist, in welche die Überladeeinheit 11 die Überladevorrichtung 4 seitlich überragt, seitlich ausgefahren und eingefahren werden kann. Wie nachfolgend noch genauer beschrieben wird, kann die Überladeeinheit 11 zwischen der hier gezeigten ausgeklappten Überladestellung und einer eingeklappten Nichtgebrauchsstellung bewegt werden. Durch seitliches Ausfahren des Rads 28 kann bei der ausgeklappten Überladestellung die dabei veränderte Schwerpunktlage der Überladevorrichtung 4 kompensiert werden. Dieses seitlich ein- und ausfahrbare Rad 28 kann bei allen Ausführungsformen der Überladevorrichtung 4 eingesetzt werden.

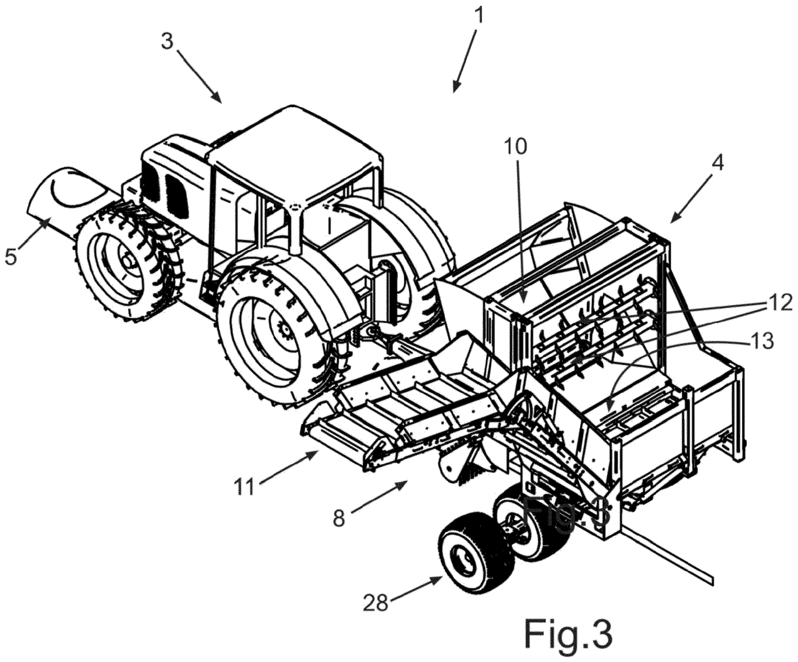

In Fig. 3 ist das Gespann 1 in einer perspektivischen Rückansicht gezeigt. In der vorliegenden Darstellung ist unter anderem nochmals gut die Anordnung der Dosierwalzen 12 zu erkennen, welche den Zwischenspeicher 10 quasi nach hinten begrenzen. Der zuvor bereits erwähnte Zugriffsbereich 13 der Überladeeinheit 11 bildet seinerseits eine Art Reservoir, in welches das im Zwischenspeicher 10 aufgenommene und geschnittene Erntegut mittels der Dosierwalzen 12 hin befördert werden kann. In dem Zugriffsbereich 13 kann beispielsweise eines von mehreren Förderbändern angeordnet sein, welches zu der Überladeeinheit 11 gehört.

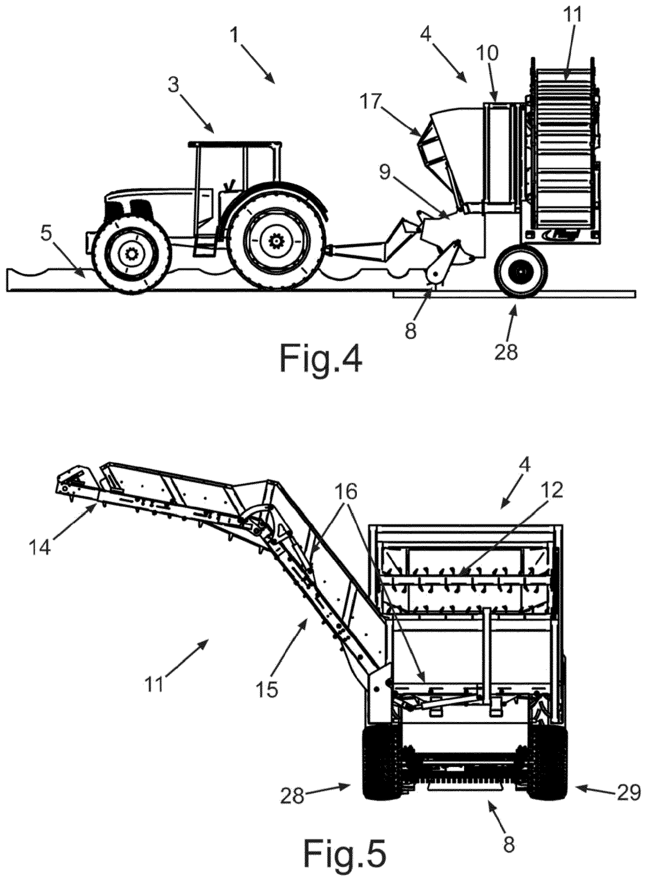

In Fig. 4 ist die erste Ausführungsform der Überladevorrichtung 4 mitsamt dem als Zugfahrzeug dienenden Traktor 3 in einer Seitenansicht gezeigt. Wie zu erkennen, baut die Überladevorrichtung 4 insbesondere aufgrund der Überladeeinheit 11 relativ hoch. Mittels der Überladeeinheit 11 können Überladehöhen von vorzugsweise maximal 4,5 m überwunden werden. Somit können Kipper oder Abschiebewagen in Form des Transportwagens 6 zuverlässig von oben über eine seitliche Laderaumwand hinweg mittels der Überladeeinheit 11 von oben beladen werden.

In Fig. 5 ist die Überladevorrichtung 4 in einer Rückansicht gezeigt, wobei die Überladeeinheit 11 in ihrer ausgeklappten Überladestellung positioniert ist. Die Überladeeinheit 11 umfasst unter anderem zwei Segmente 14, 15, welche relativ zueinander verschwenkbar miteinander verbunden sind. Das Segment 15 ist zudem verschwenkbar an der restlichen Überladevorrichtung 4 gelagert. Die Schwenkachsen der Segmente 14, 15 verlaufen alle in Längsrichtung der Überladevorrichtung. Mittels mehrerer Hydraulikzylinder 16 ist es möglich, die Segmente 14, 15 relativ zueinander zu verschwenken und zudem das Segment 15 relativ zu der Überladevorrichtung 4 zu verschwenken. Dadurch kann die Überladeeinheit 4 in der hier gezeigten ausgeklappten Überladestellung positioniert werden. Das Rad 28 ist hier noch in seiner inneren Stellung gezeigt, wobei dieses wie bereits oben beschrieben, seitlich ausgefahren werden kann. In der vorliegenden Darstellung ist gut zu erkennen, dass in dieser ausgeklappten Überladestellung der Überladeeinheit 11 sich der Schwerpunkt der gesamten Überladevorrichtung 4 nicht zwischen dem linken Rad 28 und dem rechten Rad 29 befindet. Der linke Rad 28 kann so weit nach links ausgefahren werden, dass sich der Schwerpunkt der Überladevorrichtung 4 bezogen auf die Querrichtung der Überladevorrichtung 4 zumindest im Wesentlichen mittig zwischen den beiden Rädern 28, 29 befindet. Dadurch steht und fährt die Überladevorrichtung 4 besonders stabil.

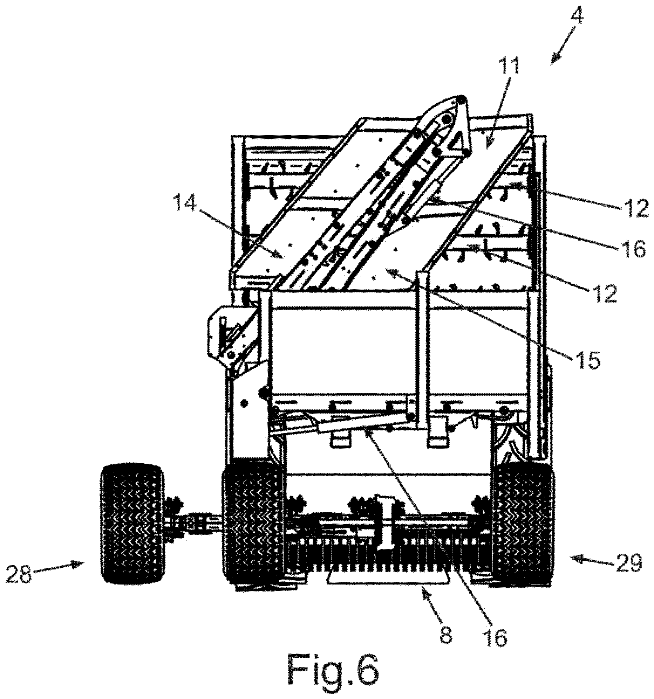

In Fig. 6 ist die Überladevorrichtung 4 in einer weiteren Rückansicht gezeigt, wobei die Überladeeinheit 4 nun in ihrer eingeklappten Nichtgebrauchsstellung angeordnet worden ist. Wie zu erkennen, können die beiden Segmente 14, 15 durch Betätigung der Hydraulikzylinder 16 aneinander geklappt werden, wobei die gesamte Überladeeinheit 11, insbesondere das Segment 15, in Richtung der Überladevorrichtung 4 seitlich eingeklappt werden kann. In der hier gezeigten eingeklappten Nichtgebrauchsstellung ragt die Überladeeinheit 11 seitlich nicht über die restlichen Überladevorrichtung hinaus und ist zudem abgesenkt angeordnet. Die eingeklappte Nichtgebrauchsstellung kann insbesondere dann eingenommen werden, wenn die Überladevorrichtung 4 über öffentliche Straßen bewegt werden soll. Das linke Rad 28 kann dann wieder nach innen eingefahren werden, da sich in der eingeklappten Nichtgebrauchsstellung der Schwerpunkt der gesamten Überladevorrichtung 4 im Wesentlichen zwischen den beiden Rädern 28, 29 befindet, wenn das linke Rad 28 seitlich eingefahren worden ist.

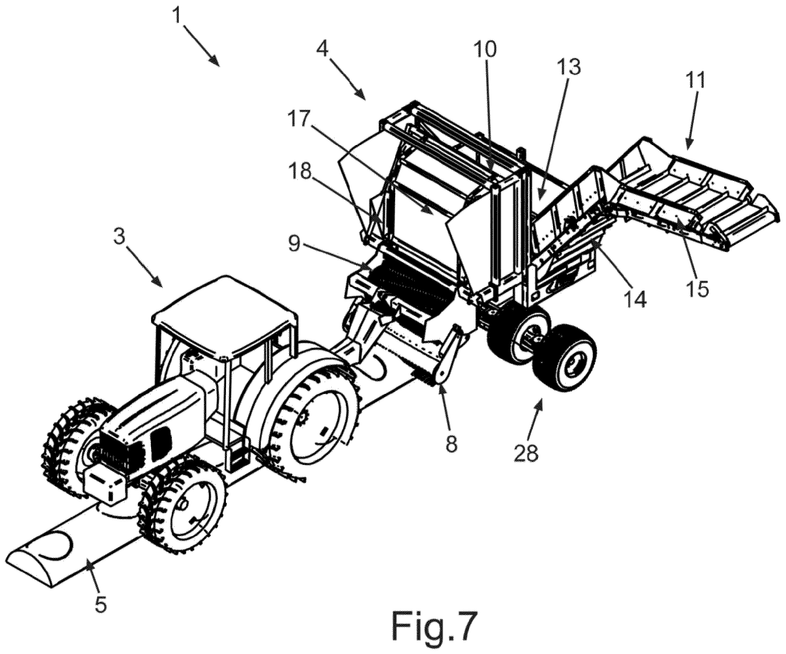

In Fig. 7 ist die von dem Traktor 3 gezogene erste Ausführungsform der Überladevorrichtung 4 in einer weiteren Perspektivansicht gezeigt, wobei eine verschwenkbare Wand 17, welche den Zwischenspeicher 10 in Richtung des Traktors 3 begrenzt, in Richtung der Überladeeinheit 11 geklappt worden ist. Neben den zuvor bereits erwähnten Dosierwalzen 12 ist die Wand 17 ebenfalls ein Teil einer Fördereinrichtung der Überladevorrichtung 4, welche dazu dient, im Zwischenspeicher 10 aufgenommenes Erntegut in den Zugriffsbereich 13 der Überladeeinheit 11 zu befördern. Die den Zwischenspeicher 10 begrenzende Wand 17 ist an ihrem unteren Ende um eine in Querrichtung der Überladevorrichtung 4 verlaufende Achse verschwenkbar gelagert. Linksseitig und rechtsseitig sind Hydraulikzylinder 18 vorgesehen, durch deren Betätigung die Wand 17 in Richtung des Traktors 3 und in Richtung der Überladeeinheit 11 geklappt werden kann. Durch das Verschwenken bzw. Klappen der Wand 17 kann im Zwischenspeicher 10 aufgenommenes Erntegut auf einfache Weise in den Zugriffsbereich 13 der Überladeeinheit 11 befördert werden.

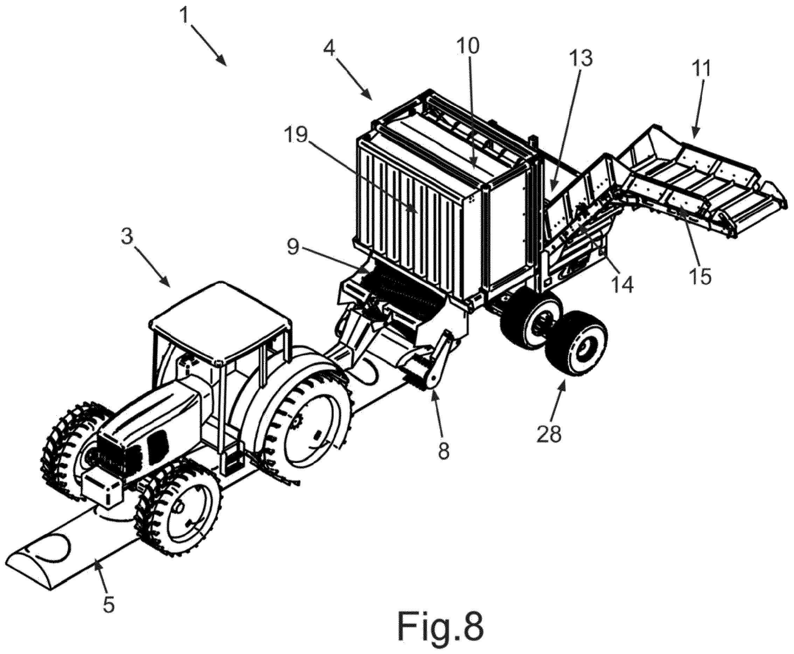

In Fig. 8 ist eine zweite Ausführungsform der von dem Traktor 3 gezogenen Überladevorrichtung 4 in einer Perspektivansicht gezeigt. Die hier gezeigte Ausführungsform der Überladevorrichtung 4 unterscheidet sich von der ersten Ausführungsform der Überladevorrichtung 4 unter anderem durch die feststehende Wand 19. Die Überladevorrichtung 4 weist also nicht mehr die verschwenkbare Wand 17 auf.

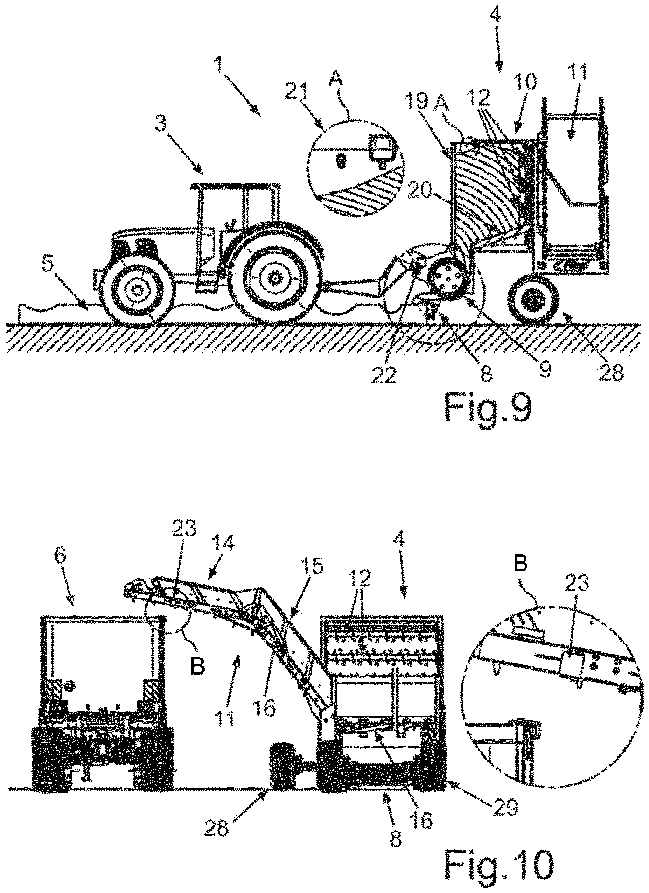

In Fig. 9 ist die zweite Ausführungsform der Überladevorrichtung 4 in einer teilweise geschnittenen Seitenansicht gezeigt. Wie zu erkennen, umfasst auch die zweite Ausführungsform der Überladevorrichtung 4 eine Mehrzahl von übereinander angeordneten Dosierwalzen 12, mittels welchen im Zwischenspeicher 10 aufgenommenes Erntegut in Richtung der Überladeeinheit 11 befördert werden kann. Zusätzlich umfasst die hier gezeigte Ausführungsform der Überladevorrichtung 4 einen im Bereich einer nicht näher bezeichneten Ladefläche des Zwischenspeichers 10 angeordneten Kratzboden 20. Mittels des Kratzbodens 20 kann im Zwischenspeicher 10 aufgenommenes Erntegut in Richtung der Überladeeinheit 11 transportiert werden. Die übereinander angeordneten Dosierwalzen 12 unterstützen die Beförderung des Ernteguts vom Zwischenspeicher 10 in den Zugriffsbereich 13 der Überladeeinheit 11.

Ein Bereich A des Zwischenspeichers 10 ist zudem in einer vergrößerten Ansicht gezeigt. In dem Bereich A ist ein Füllstandssensor 21 angebracht, welcher dazu ausgelegt ist, einen Füllstand des Zwischenspeichers 10 zu überwachen oder zum indest festzustellen, wenn der Zwischenspeicher 10 einen vorgegebenen Maximalfüllstand erreicht hat. Der Füllstandssensor 21 dient also als Erfassungseinrichtung, welche dazu ausgelegt ist, zu erfassen, wie voll der Zwischenspeicher 10 gerade befüllt worden ist. Beispielsweise kann der Füllstandssensor 21 den aktuellen Füllstand des Zwischenspeichers 10 betreffende Daten an eine Empfangseinheit 22 senden. Diese kann bei Bedarf - also wenn der Zwischenspeicher 10 voll sein sollte - z.B. ein Signal an den Traktor 3 senden, infolgedessen dieser automatisch angehalten oder verlangsamt wird. Alternativ oder zusätzlich kann die Empfangseinheit 22 beispielsweise auch noch ein Warnsignal an den Traktor 3 senden, infolgedessen eine optische und/oder akustische Warnung in der Kabine des Traktors 3 ausgegeben wird, welche den Fahrer darauf hinweist, dass der Zwischenspeicher 21 gerade seinen Maximalfüllstand erreicht hat.

In Fig. 10 ist die zweite Ausführungsform der Überladevorrichtung 4 in einer Rückansicht gezeigt, während mittels dieser der Transportwagen 6 befüllt wird. Am Segment 14 der Überladeeinheit 11 ist ein Bereich B gekennzeichnet, welcher zusätzlich noch einmal vergrößert dargestellt ist. An dem Segment 14 der Überladeeinheit 11 ist eine Erfassungseinrichtung 23 angebracht, welche einen Positionssensor aufweisen kann. Mittels diesem kann festgestellt werden, ob die Überladeeinheit 11, genauer das Segment 14, in einer bestimmungsgemäßen Überladeposition relativ zum Laderaum des Transportwagens 6 angeordnet ist. Die Erfassungseinrichtung ist also dazu ausgelegt, zu erfassen, ob die Überladeeinheit 11 in der bestimmungsgemäßen Überladeposition relativ zum Laderaum des Transportwagens 6 angeordnet ist.

Zudem kann die Erfassungseinrichtung 23 alternativ oder zusätzlich noch einen Empfänger aufweisen, der von einem nicht näher gekennzeichneten Sender, welcher am Transportwagen angebracht ist, Signale empfangen kann. Beispielsweise durch Auswertung der Signalstärke der empfangenen Signale kann der Empfänger der Erfassungseinrichtung 23 ermitteln, wie nah das Segment 14 der Überladeeinheit 11 am Transportwagen angeordnet ist. Besonders vorteilhaft ist es, wenn er Empfänger und der Positionssensor miteinander kombiniert eingesetzt werden. Als Positionssensor kann beispielsweise ein relativ günstiger Ultraschallsensor statt eines Kamerasystems eingesetzt werden. Mittels des Positionssensor muss einfach nur erfasst werden, ob das Segment 14 der der Überladeeinheit 11 an sich oberhalb vom Gespann 1 angeordnet worden ist, wohingegen die Empfangseinheit durch Auswertung des empfangenen Signals feststellen kann, ob die Überladeeinheit 11 auch tatsächlich oberhalb vom Laderaum des Transportwagens 6 angeordnet ist.

Sollte hingegen der Positionssensor allein verwendet werden, kann z.B. an der rechten hier nicht näher bezeichneten Ladewand des Transportwagens 6 ein optischer Marker angebracht sein, welcher mittels des Positionssensors erfasst werden kann. Bei dem Positionssensor kann es sich beispielsweise um einen optischen Sensor handeln, z.B. in Form eines Kamerasystems oder dergleichen. Andere Sensortypen sind aber ebenfalls möglich, mittels welchen zuverlässig erfasst werden kann, ob die Überladeeinheit 11 korrekt gegenüber dem Transportwagen 6 positioniert worden ist.

Die Überladevorrichtung 4 kann beispielsweise eine Steuereinrichtung aufweisen, welche mit dem Positionssensor und/oder dem Empfänger gekoppelt ist. Sollte der Positionssensor und/oder der Empfänger melden, dass die Überladeeinheit 11 korrekt gegenüber dem Transportwagen 6 positioniert worden ist, so kann die Steuereinrichtung beispielsweise die besagten Förderbänder der Überladeeinheit 11 automatisch aktivieren, infolgedessen der Transportwagen 6 so lange mit Erntegut beladen wird, wie die Überladeeinheit 11 korrekt gegenüber dem Transportwagen 6 positioniert ist. Sollte festgestellt werden, dass die bestimmungsgemäße Überladeposition verlassen wird, so können beispielsweise die Förderbänder der Überladeeinheit 11 automatisch gestoppt werden. Dadurch kann sichergestellt werden, dass kein Erntegut verloren geht.

Zwar wurden der Füllstandssensor 21, die Empfangseinheit 22 und die den Positionssensor und/oder die Empfangseinheit aufweisende Erfassungseinrichtung 23 nur im Zusammenhang mit der zweiten Ausführungsform der Überladevorrichtung 4 beschrieben. Jedoch können diese Elemente bzw. Einheiten auch mit den anderen Ausführungsformen der Überladevorrichtung 4 kombiniert werden.

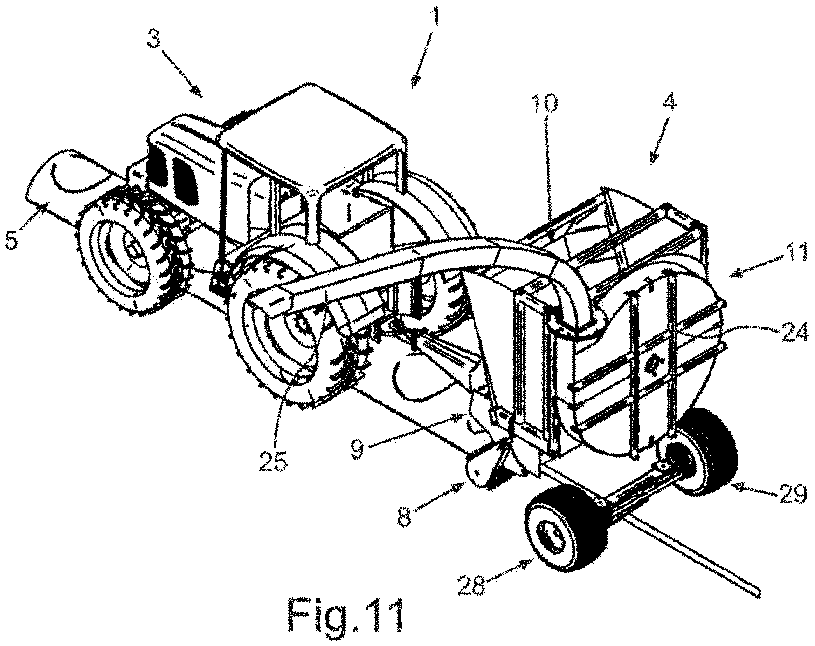

In Fig. 11 ist eine dritte Ausführungsform der mittels des Traktors 3 gezogenen Überladevorrichtung 4 in einer perspektivischen Rückansicht gezeigt. Diese Ausführungsform zeichnet sich dadurch aus, dass die Überladeeinheit 11 statt Förderbändern ein Gebläse 24 und ein daran angeordnetes Beförderungsrohr 25 aufweist. Durch Aktivieren des Gebläses 24 kann aus dem Zwischenraum 10 Erntegut in das Beförderungsrohr 25 befördert und dadurch ebenfalls in den Transportwagen 6 befördert werden.

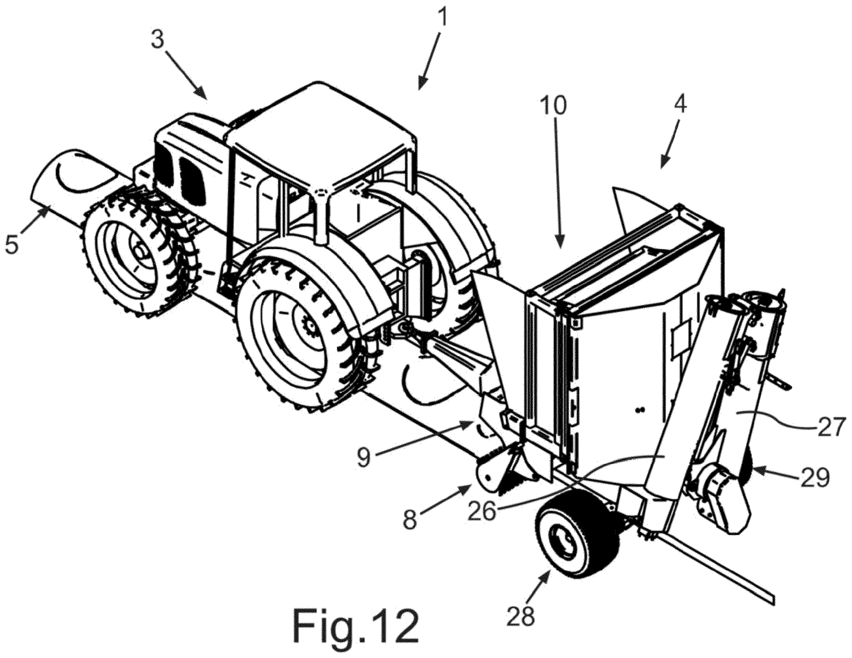

In Fig. 12 ist eine vierte mittels des Traktors 3 gezogene Ausführungsform der Überladevorrichtung 4 in einer perspektivischen Rückansicht gezeigt. Diese Ausführungsform zeichnet sich dadurch aus, dass die Überladeeinheit 11 statt Förderbändern oder dem Gebläse 24 zwei zueinander verschwenkbare Rohre 26, 27 und einen nicht näher bezeichneten Schneckenförderer aufweist. Der Schneckenförderer kann beispielsweise zweiteilig ausgebildet sein und sich innerhalb der Rohre 26, 27 erstrecken.

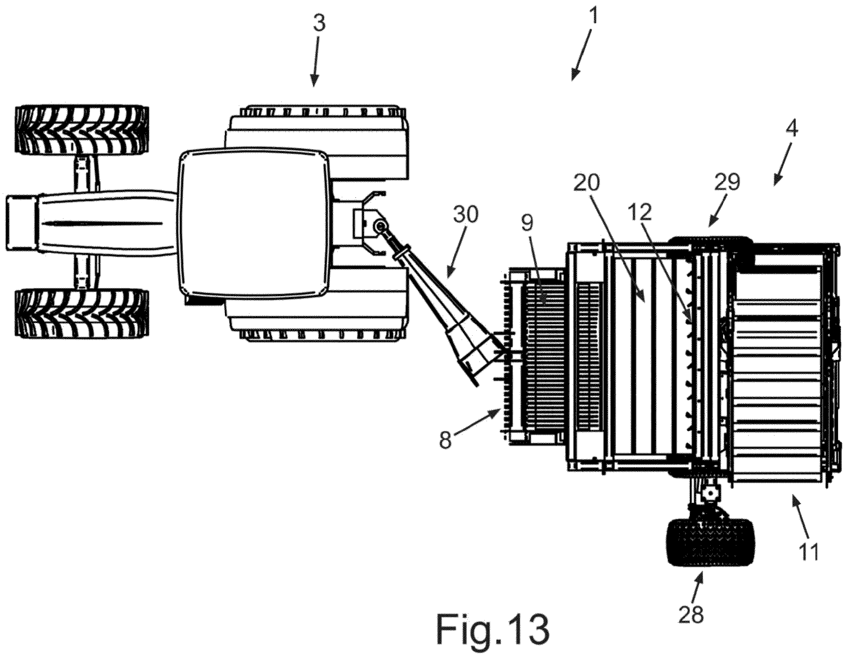

In Fig. 13 ist das Gespann 1 in einer Draufsicht gezeigt, wobei der Traktor 3 die in den Fig. 8 bis 10 bereits gezeigte zweite Ausführungsform der Überladevorrichtung 4 zieht. Wie zu erkennen ist die Überladevorrichtung 4 seitlich versetzt zu dem Traktor 3 angeordnet. An einer Deichsel 30 kann ein hier nicht näher gekennzeichneter Hydraulikzylinder oder auch ein anderer Aktor angreifen, mittels welchem die Deichsel 30 relativ zum Traktor 3 verschwenkt werden kann. Der Hydraulikzylinder kann Teil der Überladevorrichtung 4 sein. Die Möglichkeit, den Traktor 3 dadurch seitlich versetzt zur Überladevorrichtung fahren zu lassen ist beispielsweise dann vorteilhaft, wenn die Überladevorrichtung 4 mit einem hier nicht näher dargestellten Mähwerk versehen ist, um aufzunehmendes Erntegut zunächst zu mähen und dann aufzunehmen. In dem Fall kann durch das seitlich versetzte Fahren sichergestellt werden, dass der Traktor 3 das zu mähende und aufzunehmende Erntegut nicht plattfährt. Würden in dem beschriebenen Fall hingegen der Traktor 3 und die Überladevorrichtung 4 nicht seitlich versetzt zueinander, sondern in Fahrtrichtung fluchtend fahren, würde der Traktor 3 das Erntegut plattfahren und das Mähwerk an der Überladevorrichtung 4 könnte das plattgefahrene Erntegut nicht mehr ordentlich schneiden. Die verschwenkbare Deichsel 30 kann auch bei den anderen Ausführungsformen der Überladevorrichtung eingesetzt werden.

### BEZUGSZEICHENLISTE:

- 1: Gespann
- 2: Gespann
- 3: Traktor
- 4: Überladevorrichtung
- 5: Schwad
- 6: Transportwagen
- 7: Traktor
- 8: Aufsammeleinheit
- 9: Schneideinheit
- 10: Zwischenspeicher
- 11: Überladeeinheit
- 12: Dosierwalze
- 13: Zugriffsbereich der Überladeeinheit
- 14: Segment
- 15: Segment
- 16: Hydraulikzylinder
- 17: verschwenkbare Wand
- 18: Hydraulikzylinder
- 19: feststehende Wand
- 20: Kratzboden
- 21: Füllstandssensor
- 22: Empfangseinheit
- 23: Erfassungseinrichtung mit Positionssensor und/oder Empfangseinheit
- 24: Gebläse
- 25: Beförderungsrohr
- 26: Rohr
- 27: Rohr
- 28: linkes Rad
- 29: rechtes Rad
- 30: Deichsel
- A: Bereich
- B: Bereich

## Patentansprüche

1. Überladevorrichtung (4) zum Aufsammeln und Übergeben von Erntegut an einen Transportwagen (6), insbesondere von halmgutartiger Biomasse, umfassend
- eine Aufsammeleinheit (8) zum Aufsammeln des Ernteguts vom Boden;
- eine Schneideinheit (9) zum Zerschneiden des aufgesammelten Ernteguts;
- einen Zwischenspeicher (10) zum Aufnehmen des zerschnittenen Ernteguts;
- eine Fördereinrichtung zum Befördern des zerschnittenen Ernteguts aus dem Zwischenspeicher (10) zu einer Überladeeinheit (11) der Überladevorrichtung (4), mittels welcher das zerschnittene Erntegut in einen Laderaum des seitlich neben der Überladevorrichtung (4) angeordneten Transportwagens (6) über eine Laderaumwand des Laderaums hinweg beförderbar ist;
**dadurch gekennzeichnet, dass**
die Überladevorrichtung (4) ein Anhänger oder ein Kraftfahrzeug ist, wobei bei einem Fahrwerk der Überladevorrichtung (4) zumindest ein Rad seitlich ausfahrbar ist.

2. Überladevorrichtung (4) nach Anspruch 1,
**dadurch gekennzeichnet, dass**
die Aktivierung der Fördereinrichtung und die Aktivierung der Überladeeinheit (11) aneinander gekoppelt sind.

3. Überladevorrichtung (4) nach Anspruch 1 oder 2,
**dadurch gekennzeichnet, dass**
der Betrieb der Aufsammeleinheit (8) und der Schneideinheit (9) vom Betrieb der Fördereinrichtung und der Überladeeinheit (11) entkoppelt ist.

4. Überladevorrichtung (4) nach einem der vorhergehenden Ansprüche,
**dadurch gekennzeichnet, dass**
die Überladeeinheit (11) eine Erfassungseinrichtung (23) aufweist, welche dazu ausgelegt ist, zu erfassen, ob die Überladeeinheit (11) in einer bestimmungsgemäßen Überladepositionierung relativ zum Laderaum des Transportwagens (6) angeordnet ist.

5. Überladevorrichtung (4) nach einem der vorhergehenden Ansprüche,
**dadurch gekennzeichnet, dass**
der Überladevorrichtung (4) eine Erfassungseinrichtung (21) aufweist, welche dazu ausgelegt ist, zu erfassen, ob der Zwischenspeicher (10) einen vorgegebenen Maximalfüllstand erreicht hat.

6. Überladevorrichtung (4) nach einem der vorhergehenden Ansprüche,
**dadurch gekennzeichnet, dass**
die Überladeinheit (11) in einer eingeklappten Nichtgebrauchsstellung und in einer ausgeklappten Überladestellung positionierbar ist.

7. Überladevorrichtung (4) nach einem der vorhergehenden Ansprüche,
**dadurch gekennzeichnet, dass**
die Überladeeinheit (11) zum Befördern des zerschnittenen Ernteguts in den Laderaum des Transportwagens (6) ein Förderband, einen Schneckenförderer und/oder ein Gebläse (24) mit einem daran angeschlossenen Beförderungsrohr (25) aufweist.

8. Überladevorrichtung (4) nach einem der vorhergehenden Ansprüche,
**dadurch gekennzeichnet, dass**
die Förderreinrichtung wenigstens einen im Bereich einer Ladefläche des Zwischenspeichers (10) angeordneten Kratzboden (20) aufweist, mittels welchem das im Zwischenspeicher (10) aufgenommene zerschnittene Erntegut in Richtung der Überladeinheit (11) beförderbar ist.

9. Überladevorrichtung (4) nach einem der vorhergehenden Ansprüche,
**dadurch gekennzeichnet, dass**
die Förderreinrichtung wenigstens eine an einer der Überladeinheit (11) zugewandten Seite des Zwischenspeichers (10) angeordnete Dosierwalze (12) aufweist, mittels welcher das im Zwischenspeicher (10) aufgenommene zerschnittene Erntegut in Richtung der Überladeinheit (11) beförderbar ist.

10. Überladevorrichtung (4) nach einem der vorhergehenden Ansprüche,
**dadurch gekennzeichnet, dass**
die Förderreinrichtung eine den Zwischenspeicher (10) begrenzende Wand (17) aufweist, welche in Richtung der Überladeinheit (11) aus- und einfahrbar ist.

11. Überladevorrichtung (4) nach einem der vorhergehenden Ansprüche,
**dadurch gekennzeichnet, dass**
die Überladevorrichtung (4) zur Energieversorgung eine Schnittstelle für einen Zapfwellenantrieb eines Zugfahrzeugs (3) aufweist.

## Claims

1. Load transfer device (4) for collecting and transferring harvested material to a transport vehicle (6), in particular herbaceous biomass, comprising
- a collection unit (8) for collecting the harvested material from the ground;
- a cutting unit (9) for cutting up the collected harvested material;
- an intermediate store (10) for receiving the cut harvested material;
- a conveying device for conveying the cut harvested material from the intermediate store (10) to a load transfer unit (11) of the load transfer device (4), by means of which the cut harvested material can be conveyed into a loading space of the transport vehicle (6) arranged laterally next to the load transfer device (4) over a loading space wall of the loading space;
**characterised in that**
the load transfer device (4) is a trailer or a motor vehicle, wherein in a chassis of the load transfer device (4) at least one wheel is laterally extendable.

2. Load transfer device (4) according to claim 1,
**characterised in that**
the activation of the conveying device and the activation of the load transfer unit (11) are coupled to each other.

3. Load transfer device (4) according to claim 1 or 2,
**characterised in that**
the operation of the collection unit (8) and the cutting unit (9) is decoupled from the operation of the conveying device and the load transfer unit (11).

4. Load transfer device (4) according to any one of the preceding claims,
**characterised in that**
the load transfer unit (11) has a detection device (23) which is adapted to detect whether the load transfer unit (11) is arranged in an intended load transfer position relative to the loading space of the transport vehicle (6).

5. Load transfer device (4) according to any one of the preceding claims,
**characterised in that**
the load transfer device (4) has a detection device (21) which is adapted to detect whether the intermediate store (10) has reached a predetermined maximum filling level.

6. Load transfer device (4) according to any one of the preceding claims,
**characterised in that**
the load transfer unit (11) can be positioned in a folded-in non-use position and in an unfolded load transfer position.

7. Load transfer device (4) according to any one of the preceding claims,
**characterised in that**
the load transfer unit (11) for conveying the cut harvested material into the loading space of the transport vehicle (6) has a conveyor belt, a screw conveyor and/or a blower (24) with a conveying pipe (25) connected thereto.

8. Load transfer device (4) according to any one of the preceding claims,
**characterised in that**
the conveying device has at least one scraper floor (20) arranged in the region of a loading surface of the intermediate store (10), by means of which the cut harvested material received in the intermediate store (10) can be conveyed in the direction of the load transfer unit (11).

9. Load transfer device (4) according to any one of the preceding claims,
**characterised in that**
the conveying device has at least one metering roller (12) which is arranged on a side of the intermediate store (10) facing the load transfer unit (11) and by means of which the cut harvested material received in the intermediate store (10) can be conveyed in the direction of the load transfer unit (11).

10. Load transfer device (4) according to any one of the preceding claims,
**characterised in that**
the conveyor device has a wall (17) which bounds the intermediate store (10) and can be extended and retracted in the direction of the load transfer unit (11).

11. Load transfer device (4) according to any one of the preceding claims,
**characterised in that**
for power supply the load transfer device (4) has an interface for a power take-off drive of a towing vehicle (3).

## Revendications

1. Dispositif de transbordement (4) pour le ramassage et le transfert de produits de récolte à un chariot de transport (6), en particulier de biomasse en forme de paille, comprenant
- une unité de ramassage (8) pour ramasser la récolte sur le sol ;
- une unité de coupe (9) pour couper la récolte ramassée ;
- un réservoir intermédiaire (10) pour recevoir la récolte coupée ;
- un appareil de transport pour transporter le produit de récolte coupé à partir du réservoir intermédiaire (10) vers une unité de transbordement (11) du dispositif de transbordement (4), au moyen de laquelle le produit de récolte coupé peut être transporté dans un espace de chargement du chariot de transport (6) agencé latéralement à côté du dispositif de transbordement (4) par-dessus une paroi d'espace de chargement de l'espace de chargement ;
**caractérisé en ce que**
le dispositif de transbordement (4) est une remorque ou un véhicule automobile, dans lequel, pour un châssis du dispositif de transbordement (4), au moins une roue peut être sortie latéralement.

2. Dispositif de transbordement (4) selon la revendication 1,
**caractérisé en ce que**
l'activation de l'appareil de transport et l'activation de l'unité de transbordement (11) sont couplées l'une à l'autre.

3. Dispositif de transbordement (4) selon la revendication 1 ou 2,
**caractérisé en ce que**
le fonctionnement de l'unité de ramassage (8) et de l'unité de coupe (9) est découplé du fonctionnement de l'appareil de transport et de l'unité de transbordement (11).

4. Dispositif de transbordement (4) selon l'une quelconque des revendications précédentes,
**caractérisé en ce que**
l'unité de transbordement (11) présente un appareil de détection (23) qui est conçu pour détecter si l'unité de transbordement (11) est agencée dans un positionnement de transbordement conforme par rapport à l'espace de chargement du chariot de transport (6).

5. Dispositif de transbordement (4) selon l'une quelconque des revendications précédentes,
**caractérisé en ce que**
le dispositif de transbordement (4) présente un appareil de détection (21) qui est conçu pour détecter si le réservoir intermédiaire (10) a atteint un niveau de remplissage maximal prédéfini.

6. Dispositif de transbordement (4) selon l'une quelconque des revendications précédentes,
**caractérisé en ce que**
l'unité de transbordement (11) peut être positionnée dans une position de non-utilisation repliée et dans une position de transbordement déployée.

7. Dispositif de transbordement (4) selon l'une quelconque des revendications précédentes,
**caractérisé en ce que**
l'unité de transbordement (11) présente, pour transporter la récolte coupée dans l'espace de chargement du chariot de transport (6), une bande transporteuse, un transporteur à vis et/ou une soufflante (24) avec un tube de transport (25) qui y est raccordé.

8. Dispositif de transbordement (4) selon l'une quelconque des revendications précédentes,
**caractérisé en ce que**
l'appareil de transport présente au moins un fond mouvant (20) agencé dans la zone d'une surface de chargement de l'accumulateur intermédiaire (10), au moyen duquel le produit de récolte découpé reçu dans l'accumulateur intermédiaire (10) peut être transporté en direction de l'unité de transbordement (11).

9. Dispositif de transbordement (4) selon l'une quelconque des revendications précédentes,
**caractérisé en ce que**
l'appareil de transport présente au moins un rouleau de dosage (12) agencé sur un côté de l'accumulateur intermédiaire (10) tourné vers l'unité de transbordement (11), au moyen duquel le produit de récolte coupé, reçu dans l'accumulateur intermédiaire (10), peut être transporté en direction de l'unité de transbordement (11).

10. Dispositif de transbordement (4) selon l'une quelconque des revendications précédentes,
**caractérisé en ce que**
l'appareil de transport présente une paroi (17) délimitant le réservoir intermédiaire (10), qui peut être sortie et rentrée en direction de l'unité de transbordement (11).

11. Dispositif de transbordement (4) selon l'une quelconque des revendications précédentes,
**caractérisé en ce que**
le dispositif de transbordement (4) présente, pour l'alimentation en énergie, une interface pour un entraînement par prise de force d'un véhicule tracteur (3).
